(19) Europäisches Patentamt

European Patent Office

Office européen des brevets

(11) EP 1 136 951 A2

(12) EUROPEAN PATENT APPLICATION

(43) Date of publication:
26.09.2001 Bulletin 2001/39

(51) Int Cl.⁷: G06T 17/20

(21) Application number: 01107177.6

(22) Date of filing: 22.03.2001

(84) Designated Contracting States:
AT BE CH CY DE DK ES FI FR GB GR IE IT LI LU
MC NL PT SE TR
Designated Extension States:
AL LT LV MK RO SI

(30) Priority: 23.03.2000 US 534123

(71) Applicant: OPTIMOD SOFTWARE SYSTEMS, LTD.
JERUSALEM 91341 (IL)

(72) Inventor: Zeitoun, David Gaston,
Optimod Software Syst., Ltd
Jerusalem 91341 (IL)

(74) Representative: Hiltl, Elmar, Dr. et al
DIEHL.GLAESER.HILTL & PARTNER,
Patentanwälte,
Augustenstrasse 46
80333 München (DE)

(54) **Method for accelerating mesh generation**

(57) The present invention provides a system that accelerates solution of linear matrix equations resulting from mesh computation. An accelerator of the present invention is implemented as a library externally connected to an analyzer/solver solving linear matrix equations based on a mesh generated by a mesh generator. The accelerator received a fine mesh resulting in N*N linear matrix equations and calculates an optimum coarse mesh based on the fine mesh. N is the number of nodes in the fine mesh. The coarse mesh is sent to the analyzer/solver. M*M linear matrix equations, which are equivalent to the N*N linear matrix equations, are calculated on the coarse mesh by the analyzer/solver. M is the number nodes in the coarse mesh. The accelerator receives first solutions of the M*M linear matrix equations. Then, second solutions of the N*N linear matrix equations are calculated by interpolating the first solutions using an optimal estimates of the gradient and Hessian of the solution at points of the coarse mesh. According to the accelerator of the present invention, the run time of the analyzer/solver is significantly reduced, while desirable accuracy can be controlled.

Fig. 2

EP 1 136 951 A2

**Description**

BACKGROUND OF THE INVENTION

1. Field of the Invention

The present invention relates to solving systems of linear equations by computerized numerical analysis. In particular, the present invention is directed towards speeding up the analysis of CAD/CAM, GIS or 3-D rendering systems.

2. Description of Related Art

There are various kinds of commercially available systems that deal with graphics, for example, CAD/CAM (computer aided design / computer aided manufacturing) systems, GIS (geographical information systems), and 3-D rendering systems. One can design an object by using these systems. The object can be mechanical parts, geographical features, and so on. These systems are commonly used with a mesh generator, which is also commercially available, and an analyser/solver to analyze phenomena occurring on the objects. The phenomena include, for example, vibration or heat distribution of mechanical parts, waterflow or pollution distribution of geography in a studied region and so on. Commercially available analyzer/solvers are also available that receive mesh data representing the object to be analyzed.

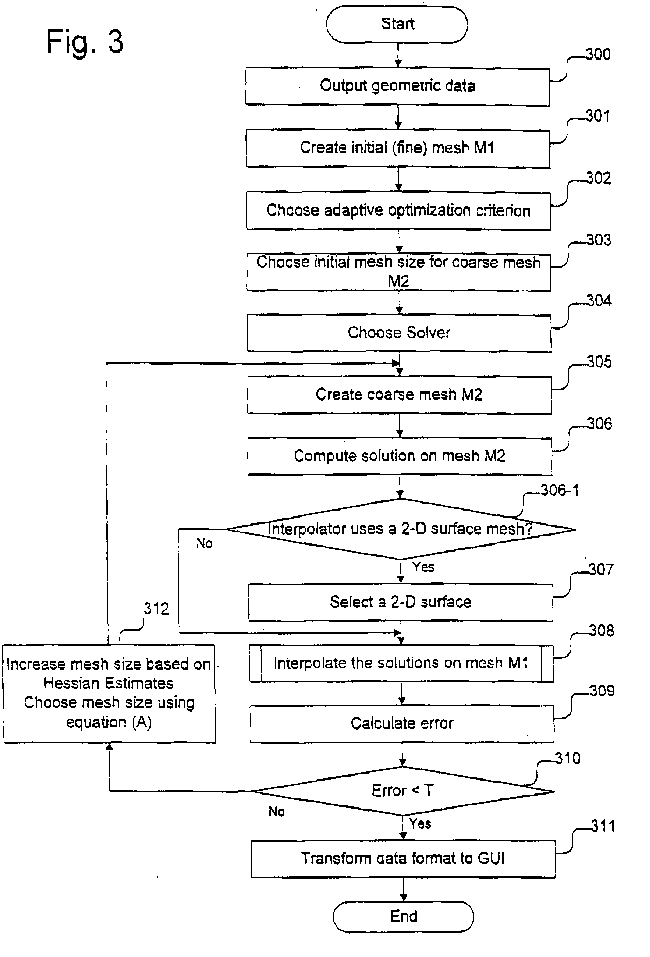

Fig. 3 shows a configuration of a conventional system that uses a CAD, mesh generator, and an analyzer/solver. The object produced by the CAD 1 is passed to the mesh generator 2. The mesh generator 2 generates a mesh data array corresponding to the object. The mesh data is sent to the analyzer/solver. The analyzer/solver represents the phenomena in a form of linear equations and solves the linear equations. The solutions produced by the analyzer/solver is sent back to the CAD 1 and the phenomena are graphically displayed with the object.

When this kind of system is configured, there are always three factors to consider, i.e., accuracy of solutions, computational labor (running time) solving the linear equations, and the amount of memory required for solving the equations. These three factors are trade-offs. In other words, it is difficult to satisfy the requirements of all of these factors (i.e. maximizing accuracy while minimizing computation time and data storage requirement) in one system (i. e. at the same time).

Many classical methods are provided to solve the linear matrix equations by using computers, for example, Gaussian method, LU method, Factorization method, Choleski method, Householder method, Gauss method, Seidel method, Gradient Method, Conjugate gradient method, and so on. The analyzers/solvers solve the linear equations based on one of these methods.

Systems of the linear equations with a number N of unknowns may be written, in a matrix equation form, as: AX=B where A is a N*N matrix, X is the vector of unknown and B is the vector of forcing terms. When discretization on a grid is used, the number N corresponds to the total number of variable unknown at the knots of the mesh.

The computation time for carrying out these classical methods are highly dependant on the number N. Usually, N is a large number. In addition, if the object to be computed becomes complicated, N increases drastically in order to obtain a desirable accuracy in the solution. Accordingly, it is difficult to obtain an adequate solution in a reasonable computation time based on the classical methods described above.

One way to improve (i.e. reduce) the running time of such a system is to use a multigrid method, which uses an auxiliary coarse mesh to reduce the total number of N. Another improvement is multi-processing to calculate the linear equations in parallel. However, both of these strategies need to be integrated with the original analyzers/solvers. In other words, internal codes of the analyzer/solver systems should be rewritten to accelerate the computation. Accordingly, such a improvement is inconvenient for users and developers.

An adaptive mesh technique can be used for grid optimization. The classic steps for the grid optimization may be summarized as follows. Details are explained in "Handbook of Grid Generation", Thompson J.F., BK Soni and Weatherill NP, Chapter 33, CRC Press, 1999, the entire disclosure of which is expressly incorporated herein by reference.

1. Construct an initial mesh $M0$ and compute the solution $U0$ resulting in an N*N linear system $AU0 = B$ resulting from mesh generator,
2. Choose an adaptive optimization criterion $\sigma(M0, U0, -)$.
3. Find *Madapt = ArgMin*$\sigma(M0, U0, M)$. Solve on the auxiliary grid *Madapt with* M nodal unknowns.
4. Construct the equivalent $M * M$ linear system: A'X'=B'
5. Solve the $M * M$ linear system.

When the optimization criterion is the reduction of computational labor for the solution of the linear system, $M$ is much smaller than N. However, in this method, N*N linear system needs to be calculated at least once in step 1. In addition, the selected optimization criterion $\sigma(M0, U0, -)$ is not adequate to achieve the desired accuracy in a reasonable time. In other words, to achieve adequate accuracy, plural iterations may be required. Both of these are obstacles to the reduction of computational labor of solving the linear system.

The present invention is provided to overcome these obstacles.

SUMMARY OF THE INVENTION

The objective of the present invention is to provide a method and a system that accelerates solution of linear matrix equations resulting from mesh computation. The accelerator is provided as an external computer library.

This invention provides to an accelerator and an accelerating method for accelerating operation of a solver/analyzer solving a linear system of equations resulting from the discretization of ordinary, partial differential equations and regular equations on a structured or unstructured grid (mesh).

The present invention provides an accelerator externally connectable to an analyzer/solver and a mesh generator. The analyzer/solver solving linear matrix equations based on a mesh generated by the mesh generator. The accelerator includes a mesh size optimizer that receives a first mesh generated by the mesh generator, calculates an optimum mesh size based on the first mesh, and outputs the optimum mesh size to the mesh generator so that the mesh generator generates a second mesh in accordance with the optimum mesh size, the optimum mesh size being larger than the size of the first mesh. The accelerator further includes an interpolator that reads solutions calculated on the second mesh by the analyzer/solver and converts the solutions on the second mesh into solutions on the first mesh by interpolation.

According to the features of the present invention, the accelerator that is used with any commercially available analyzer/solver based on mesh or grid generation to reduce the running time of the analyzer/solver without requiring any changes in the executable or source codes of the analyzer/solver, and while maintaining the accuracy of solutions. The running time is reduced by use of a software library externally connected to the analyzer/solver.

The analyzer/solver can be selected from a plurality of analyzers/solvers having a plurality of input and output data structures. The accelerator further includes a solver selector that selects one of the data structures corresponding to the selected analyzer/solver. While selecting the data structures, the solver selector uses model database that stores a relationship between said plurality of analyzers/solvers and the plurality of data structures. Thus, the present invention is usable with at least CAD/CAM, GIS and 3D-rendering systems and their respective analyzers/solvers.

The accelerator can also include decomposer that receives the solutions on 3-D mesh data from the analyzer/solver and converts the solutions on the 3-D mesh data into solutions. Thus, the present invention can be usable with analyzers/solvers or CAD/CAM, GIS or 3D-rendering systems that generates 3-D data and 2-D data.

The accelerator also includes an error estimator that estimates an error in the interpolated solutions is less than a predetermined amount. The error can be estimated based on the Hessian of the interpolated solutions. If the error is larger than the predetermined amount, coarse mesh size is adjusted and solution of equations on the adjusted mesh is performed. Thus, the adequate accuracy is ensured.

The coarse mesh size optimizer calculates the optimum mesh size based on a priori estimation. Thereafter, the coarse mesh size optimizer adjusts the optimum mesh size based upon a least square method.

In particular, the coarse mesh size optimizer adjusts the optimum mesh size by an equation

$$Min_a I_c(a) = Min_a \int_\Omega [R_L(a,x)]^2 d\Omega + c \int_\Gamma [R_B(a,x)]^2 d\Gamma,$$

where

$$R_L(a,x) = L(u_{1h}(x) - u_{2H}(x)) \; x \; in \; \Omega,$$

$$R_B(a,x) = B(u_{1h}(x) - u_{2H}(x)) \; x \; on \; \Gamma,$$

wherein $u_{1h}(x)$ is a continuous solution on the fine mesh obtained by interpolating discrete solutions a1 (vector of N numbers), which are the solutions of N*N linear equations, $u_{2H}(x)$ is a continuous solution calculated on the coarse mesh, and is obtained by interpolating discrete solutions a2 (vector of M numbers) using a gradient estimate, which are the solutions of M*M linear matrix equations, c is a weighting function to emphasize the second term, $L$ and $B$ are operators determined by the type of analyzers/solvers or are defined by the user, and $\Omega$ and $\Gamma$ are a domain and a boundary of the object to be analyzed.

The solutions calculated by the analyzer/solver are discrete solutions on respective points of the second mesh. The interpolator calculates a continuous solution $u_{2H}(x)$ for a whole domain by using the relationship:

$$u_{2H}(M) = u_{2H}(M_1) + \nabla u_{2H}|_{M_1} \cdot MM_1 + H(MM_1) \cdot MM_1$$

where M is a point of the first mesh, $M_1$ is the closest point of the second mesh, $\nabla u|_{M1}$ is a gradient vector of the solution $u_{2H}(x)$, $H(MM_1)$ is the Hessian of the solution applied to the vector $MM_1$, and $MM_1$ represents the vector from point $M_1$ of coordinates $(x1, y1, z1)$ to the point $M$ of coordinates $(x, y, z)$.

Further, the interpolator projects the solutions on the second mesh calculated by the analyzer/solver onto the first mesh by using the relationship:

$$P_i(x) = \frac{1}{np}[(1-\lambda_i(x)) + \lambda_{(i-1)}(x)];$$

$$\lambda_i = \frac{(x - xi)(xi - x(i + 1)) + (y - y1)(y - y(i + 1) + (z - zi)(z - z(i + 1))}{\left\|M_i M_{(i+1)}\right\|^2}$$

where $np$ is the number of interpolation points of the first mesh, and where $M_i$ and $M_{(i+1)}$ are points on the second mesh having respective coordinates $(xi, yi, zi)$ and $(x(i + 1), y(i + 1), z(i + 1))$.

The interpolator projects the solutions on the second mesh onto the first mesh by using the relationship:

$$U1app(x) = \Sigma P_k(x)u_{2H}(M_k), \ k = 1...Ne,$$

where $x$ is a spacial point, which corresponds to a point on first mesh, $M_k$ is a set of points constituting at least a portion of an element $E$ on the second mesh that includes the point x, $Ne$ is the total number of the interpolation points fixed by the user, and $u_{2H}(x)$ is a continuous solution for a whole domain calculated based on the solutions on points of the second mesh.

By using these error estimation technique, acceleration and adequate accuracy can be achieved at the same time.

In another aspect of the present invention, there is provided a method for accelerating a computation of an analyzer/solver that solves linear matrix equations resulting from mesh generation. In the method, a fine mesh resulting in a N*N linear system is generated. Then, an adaptive optimization criterion is selected. An optimum mesh size is obtained based on an a priori estimation. Then, a coarse mesh with the optimum mesh size resulting in a M*M linear system, which corresponds to the N*N linear system is generated and the M*M linear system is solved to obtain first solutions. Finally, second solutions of the N*N linear system is calculated by interpolation of the first solutions of the M*M linear system. According to the features of the present invention, the computation of the linear system is accelerated.

In further aspect of the present invention, the analyzer/solver is selected from a plurality of analyzers/solvers. Then, a data structure of the selected analyzer/solver is determined according to the selected analyzer/solver. Thus, the method can be used with a variety of analyzers/solvers.

In addition, the first solutions for a 3-D object are decomposed into groups so that each group corresponds to a 2-D surface of the object. Thus, the method of the present invention can be used with an analyzer/solver which generates both 2-D and 3-D solutions.

In further aspect of the present invention, an error of the second solutions is estimated based upon a Hessian, and it is determined whether the error is less than a predetermined amount. When the error is not less than the predetermined amount, generating a new mesh with a mesh size smaller than the mesh size of the coarse mesh and computing the second solutions on the new mesh. Thus, the adequate accuracy is secured.

In another aspect of the present invention, there is provided a system that accelerates solution of linear matrix equations by a numerical analyzer/solver resulting from mesh computation using a computer library external of said analyzer/solver. The system utilizes adaptive grid techniques on two levels of mesh computation. The system generates a coarse mesh from a fine mesh and solves the equations on the coarse mesh. The system interpolates error between the coarse and fine meshes is controlled by an estimation method, in particular, least squares method. According to the present invention, acceleration of the analyzer/solver is implemented as a library, thus, the internal codes of the analyzer/solver are not required to be changed.

In another aspect of the present invention, 35, there is provided a program storage device readable by a machine, the program storage device tangibly embodying a program of instruction executable by the machine to perform a method for accelerating solutions of linear matrix equations. The method includes, reading a fine mesh generated by a mesh generator, the fine mesh resulting in a N*N linear system; finding an optimum mesh size based on the fine mesh by using an a priori estimation; generating a coarse mesh based on the optimum mesh size, resulting in a M*M linear system, which corresponds to the N*N linear system; instructing an analyzer/solver to solve the M*M linear system to obtain first solutions; and computing second solutions of the N*N linear system by interpolation of the first solutions of the M*M linear system.

The program storage device can also have a model database that stores a relationship between a plurality of analyzers/solvers and a plurality of data structures. The method further includes receiving an input selecting one of the plurality of analyzer/solver; and retrieving one of the plurality of data structures corresponding to the selected analyzer/solver.

BRIEF DESCRIPTION OF THE DRAWINGS

The present invention is further described in the detailed description which follows, in reference to the noted plurality of drawings by way of nonlimiting examples of exemplary embodiments of the present invention, in which like reference numerals represent similar parts throughout the several views of the drawings, and wherein:

Fig. 1 is a block diagram illustrating in schematic form a connection between a CAD/GIS/3-D rendering system, a mesh generator, analyzer/solver and an accelerator according to the present invention.
Fig. 2 is a block diagram illustrating a configuration of the accelerator of an embodiment according to the present invention.
Fig. 3 is a flowchart illustrating an operation of the accelerator of the embodiment according to the present invention.
Fig. 4 is a flow chart illustrating a detailed operation of the step S308 shown in Fig. 3.
Fig. 5 is a table illustrating examples of several commercially available graphic systems (CAD, GIS and 3-D rendering) and examples of analyzers/solvers that analyzes phenomena related to objects created by the graphic systems.

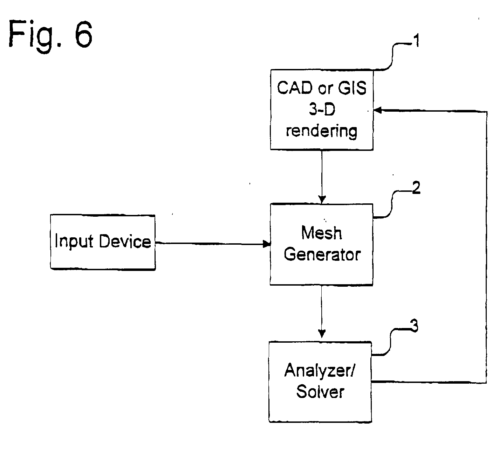

Fig. 6 is a conventional system including a CAD system, a mesh generator and an analyzer/solver.

DETAILED DESCRIPTION OF PREFERRED EMBODIMENTS

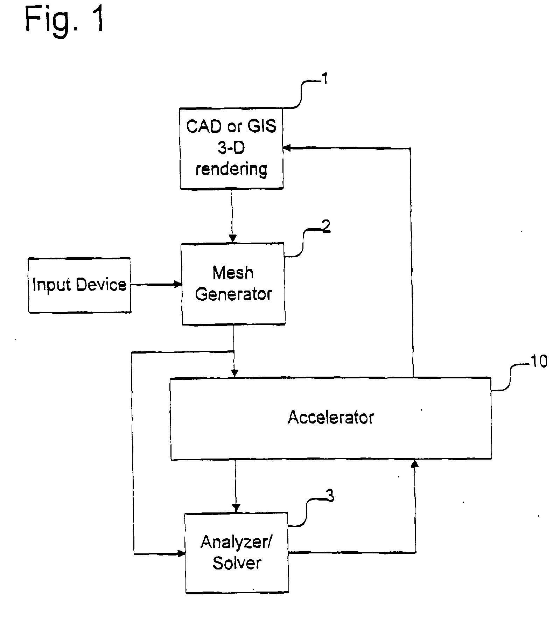

Fig. 1 is a block diagram illustrating an accelerator of the present invention used with CAD/CAM system and an analyzer/solver for the CAD/CAM system. The CAD/CAM system and the analyzer/solver with which it is used is a typical example of a system that solves linear matrix equations resulting from mesh generation in order to analyze phenomena. A commercially available CAD/CAM system 1 outputs a geometric data, which is a boundary of an object to be analyzed. The geometric data is represented by, for example, basic surfaces, edges, and subdomains that represents the boundary of the object. The details of the geometric data structure are shown in, for example, section 10.4 of "Triangulation and Meshing- Application to Finite Elements", George P.L. and Borouchaki H. Delauney, Hermes 1998, the entire disclosure of which is explicitly incorporated herein by reference.

A commercially available mesh generator 2 receives the geometric data from the CAD/CAM system and receives parameters, such as mesh size, regularity, number of elements, and so on, from the user through input device, such as a keyboard, mouse, disk, tape and so on. Based on the geometric data and the parameters, the mesh generator creates a mesh data (fine mesh data) and outputs it. The mesh data includes, for example, nodes, edges, types of elements, types of discretizations and so on. Details of mesh data structures are shown in, for example, section 10.6 of "Triangulation and Meshing- Application to Finite Elements", the entire disclosure of which is explicitly incorporated herein by reference.

The accelerator 10 of the present invention is provided as computer library such as a DLL (dynamic linked library) file, in this embodiment. The accelerator 10 reads the fine mesh data generated by the mesh generator 2 and calculates a new coarse mesh data based on the fine mesh data and outputs the calculated coarse mesh data to an analyzer/solver 3.

The analyzer/solver 3 solves predetermined linear equations for a certain analysis of phenomenon on the received coarse mesh. The accelerator 10 reads the solutions on the coarse mesh calculated by the analyzer/solver 3 and calculates solutions on the fine mesh based on the solutions of the coarse mesh. In other words, solutions are generated on nodes of coarse mesh, and interpolated to constitute continuous solutions on the domain (i.e. entire object). Then, the solutions are projected onto the nodes of the fine mesh and interpolated to comprise continuous solutions on the entire domain.

As described above, the accelerator of the present invention is externally attached to the commercially available CAD/CAM systems, mesh generators, and analyzers/solvers. Thus, the accelerator of the present invention performs the process of acceleration as a preprocessor and postprocessor of the analyzers/solvers. The acceleration of the analyzers/solvers can be achieved without any changes in the executable or source code of the analyzers/solvers.

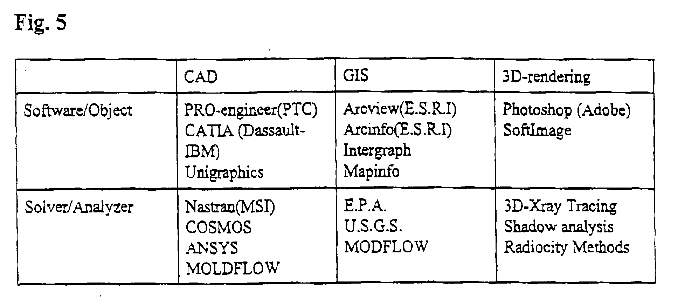

The above description has been set forth by reference to a CAD/CAM system. However, instead of a CAD/CAM system, the accelerator of the present invention can be used with GIS systems and 3-D rendering systems, which are other examples of the systems that use (and solve) linear matrix equations resulting from mesh generation. There are many commercially available CAD/CAM systems, GIS systems and 3-D rendering systems. There are also commercially available analyzers/solvers for analyzing phenomena occurring on objects made by the CAD/CAM systems, the GIS systems and 3-D rendering systems. Example of some of these systems are shown in Fig. 5.

In the present application, the term "analyzer/solver" is used as a generic term to encompass both "solvers" such as used in CAD systems, and "analyzers" such as used in GIS system.

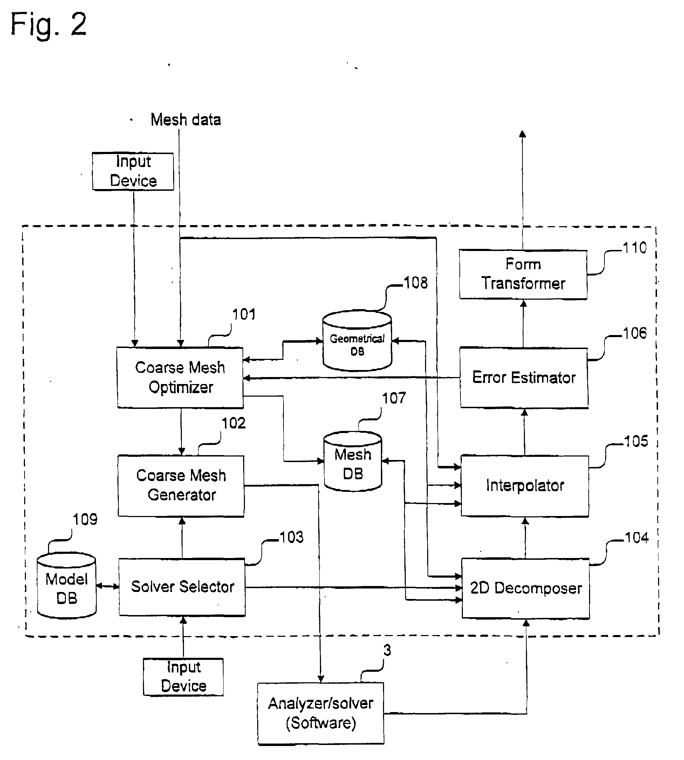

Fig. 2 is a block diagram illustrating a configuration of the accelerator 10 according to the present invention. The fine mesh data generated by the mesh generator 2 (Fig.1) is input to a coarse mesh optimizer 101.

The coarse mesh optimizer 101 receives a desired accuracy from the user via an input device. The coarse mesh optimizer 101 estimates an optimum coarse mesh that is likely to achieve an input accuracy, based on the fine mesh received. The mesh (numerical mesh) is described by a series of parameters. The parameter includes size, number of nodes, number of elements, regularity, orthogonality. In this embodiment, only the size, the number of nodes and number of elements are used.

In more detail, the coarse mesh optimizer 101 estimates the optimum coarse mesh according to two ways. When an initial optimum coarse mesh is calculated, the parameters of the coarse mesh, i.e., a size, number of nodes and number of elements are determined as a ratio of the size of the fine mesh, and are given as a default based on a priori estimation. (refer to "Handbook of Grid Generation" cited above) The calculated parameters are sent to coarse mesh generator 102 to generates corresponding initial coarse mesh. After the initial coarse mesh has been generated, the size of the coarse mesh is adjusted by the estimation of the Hessian (second order derivatives) of the solution, in order to obtain the desired accuracy (refer to "Delauney Trianglulation and Meshing-Application to Finite Elements" cited above)

The coarse mesh generator 102 generates a coarse mesh according to the parameters input by the coarse mesh size optimizer 101, and outputs the generated coarse mesh to the analyzer/solver 3.

Physically, the coarse mesh generator 102 does not need to be provided separately from the mesh generator 2 (Fig.1). In other words, the coarse mesh optimizer 101 can output parameters to the commercially available mesh generator 2 to have the mesh generator 2 generate a coarse mesh. In this case, a controller (software) will be provided to direct the generated coarse mesh generated by the mesh generator 2 to the analyzer/solver 3.

In this embodiment, it is assumed that CAD system 1 deals with a 3-D object, and thus, the mesh generator 2 and coarse mesh generator 102 generate a 3-D mesh data. The analyzer/solver can provide solutions on 3-D mesh, surface mesh of 3-D objects, 2-D mesh or 2-D layered meshes depending on the analyzer/solver type. An interpolator 105 has been developed for each type of mesh. For an interpolator which operates on 2-D meshes or surface meshes, a 2-D decomposer 104 is provided to receive 3-D solution data on the coarse grid and to decompose the 3-D solution data into 2-D solution so that an interpolator 105 can handle the data. Thus, the interpolator is adapted to cooperate with any type of analyzer/solver. If the CAD system, mesh generator and the analyzer/solver produces only 2-D data, 2-D decomposer is not required.

The interpolator 105 interpolates the solutions on the coarse mesh to obtain corresponding solutions on the fine mesh. The details of the interpolator will be explained later.

An error estimator 106 receives the solutions on the fine mesh from the interpolator 105 and estimates an error based on the Hessian. The error estimator 106 can be provided in a part of the accelerator independently from the analyzer/solver 3. However, usually, each commercially available analyzer/solver has its own error estimator. Therefore, this system can utilize the error estimator provided by the analyzer/solver. In other words, the interpolator 105 can send the solutions resulting from the interpolation to the analyzer/solver 3 to have the analyzer/solver calculate the error. If the obtained solution is adequate for the accuracy desired (i.e., the error is less than a predetermined threshold), the solutions on the fine mesh is sent to a form transformer 110 to transform the format of the solution data into GUI data, which is compatible with the format of the CAD (GIS or 3D) system so that it can be displayed on the CAD system. On the other hand, if the solution is not adequate, the error estimator 106 instructs the coarse mesh size optimizer 101 that the error is too large (i.e. that the coarse mesh was too large). Then, the coarse mesh size optimizer 101 resizes the mesh size, for example, increments the number of nodes of the mesh, and sends an instruction to the coarse mesh generator 102 to generate a new mesh based on the revised mesh size and new solutions are generated on the new mesh.

A solver selector 103 and model database 109 are provided for enabling the accelerator 10 to be used with a variety of analyzers/solvers 3. Different analyzers/solvers may have different input data structures, output data structures, and different types of phenomenon to be analyzed by equations. Therefore, the accelerator 10 must transform a data structure upon which the accelerator operates into an input data structure compatible with the analyzer/solver, and must transform an output data structure of the analyzer/solver into the data structure upon which the accelerator can operate. In order to know which model of the solver uses which types of data structure, the model database stores a variety of models of the analyzers/solvers in association with input data structures and output data structure of the models.

In more detail, the data structures of the analyzers/solvers are classified according to a series of criterion, such as (1) dimension; (2) solid geometry; (3) solver type. The solver type includes (a) software type; (b) engineering; (c) profession; (d) speciality; (e) model type; (f) subject; (g) numerical methods.

In operation, the user inputs a model of an analyzer/solver that the user wants to use. The solver selector 103 receives the model input by the user and retrieves an input data structure and an output data structure associated with the model from the model database. The solver selector 103 outputs the input data structure to the coarse mesh generator 102 so as to have the coarse mesh generator 102 output a coarse mesh in the input data structure format required by the analyzer/solver. As an option, the output data structure is sent to the 2-D decomposer so as to have the 2-D decomposer transform the 3-D output of the analyzer/solver into the 2-D data in the data format of the interpolator 105.

During the calculation of the optimum mesh size in the coarse mesh optimizer, and the calculation of interpolation by the interpolator 105 and the 2-D decomposition by the 2-D decomposer, a geometrical database 107 and a mesh database 108 are used.

The geometrical database 107 is provided to extract and classify the geometrical features of a given three dimensional (3-D) object. The geometrical database 107 is a series of connected fields. Each field is associated with a series of parameters. The followings are examples of fields and corresponding parameters (in the form of "field: parameter").

> (1) planer surfaces: (a) three coordinates of the origin of the surface; (b) three components of the two basis vectors of the plane.
> (2) cylindrical surfaces: (a) three coordinates of the origins of center of the basis; (b) the three components of the two basis vectors of the cylinder.
> (3) vertex and segments: (a) control points: (b) degree of spline interpolates.
> (4) control points: coordinates of the points
> (5) subdomains: part numbering of the object

Spherical surfaces, prismatic surfaces and so on can also be stored as fields in association with a set of parameters. As noted from the example of the fields, a parameter (control point) for a field (vertex and segments) can be another field.

In this embodiment, this database is also implemented by using a database software, such as ACCESS (a product of Microsoft Corp.). Of course, it is within the scope of the present claim invention to user other appropriate software.

The mesh database 108 is provided to extract and classify the data of a mesh generated by the mesh generator 2. The mesh database 108 is a series of fields. Each field is associated with a set of parameters. The followings are example of fields and corresponding parameters (in the form of "field-parameter").

> (1) control: (a) mesh dimension; (b) number of nodes; (c)number of elements; (d) regularity; (e) orthogonality, etc.
> (2) type: (a) triangles; (b) quadrilateral; (c) tetrahedra; (d) pentahedra; etc.
> (3) node numbering: (a) indices of nodes; (b) x-position, y-position, and z-position of the node, etc.
> (4) element numbering: (a) element indices; (b) connectivity of vertices (belonging to the element), etc.
> (5) mesh geometry: (a) number of vertices for each of the element indices

The mesh database 107 is also implemented by using a database software, such as ACCESS. Of course, it is within the scope of the present claim invention to user other appropriate software.

The geometrical data corresponding to the field is input to the geometrical database and corresponding parameters are returned. On the other hand, the mesh data corresponding to the field is input to the mesh database and corresponding parameters are returned. These parameters are used during the calculation of interpolation, mesh optimization and so on.

The geometrical database is used only when surface meshing is used. The mesh database is extensively used in the equations for mesh optimization and interpolation:

> (1) in equation (A), for the selection of the adjacent element to a given node;
> (2) in equation (D), for the computation of the element numbers and nodal coordinates of a node.

Equations (A) and (D) are described later.

According to the present invention, the geometrical, mesh and model databases, the computer codes that read solutions on the coarse mesh (by the solver), use the interpolator and the appropriate relationships $P_k(x)$ (as will be discussed below) to map the solutions onto the fine mesh, and transforms the solutions into the correct output format as well as a GUI that creates a visualization of the results are contained in an external computer library. The external computer library will vary based upon the type of CAD (GIS or 3-D rendering) system used, the solver used, the mesh generator used as well as based upon the platform (i.e. Windows NT, UNIX) used. The external computer library can be embodied as a CD floppy disk(s) or any other record storage medium. The external computer library can also be distributed through a network such as the internet.

Fig. 3 is a flowchart illustrating the operations of the accelerator of the present invention. The basic method of the present invention is based on the adaptive mesh techniques and pre-conditioned computations. The main point of this method is that the problem (equations) is solved on a coarse mesh. Thereafter, the solutions on the coarse mesh are projected onto the fine mesh.

In step S300, upon starting, geometry data of an object to be analyzed is produced by the CAD system and sent to the mesh generator. Also characteristics of the object, such as heat conductivity, electric conductivity and so on, depending upon the problem to be solved, are input. These characteristics constitutes the conditions of the linear equations solved in the analyzer/solver.

In step S301, an initial (fine) mesh $M1$, resulting in an $N * N$ linear system $AU1 = B$, is generated. $N$ corresponds to the number of nodes of the fine mesh M1. The fine mesh M1 is created by a conventional mesh generator 2 using conventional algorithms for an unstructured grid or for an structured grid. A conventional algorithm for unstructured grid is, for example, the Delauney algorithm discussed in, "Handbook of Grid Generation", Thompson J.F., BK Soni and Weatherill NP, CRC Press, 1999, the disclosure of which is expressly incorporated herein by reference in its entirety. A conventional algorithm for a structured grid is curvilinear grids, which is also shown in the above-noted "Handbook of Grid Generation". These algorithms are a kind of parametric meshing, and more information on parametric meshing can be obtained from, for example, the above-noted "Handbook of Grid Generation", "Introduction a l'analyse numerique des equations aux derivees partielles", Raviart P.A. and J.M. Thomas, Editions Masson (In French) 1988, and , "Introduction to numerical linear algebra and optimization", Ciarlet P.G. Cambridge University Press, 1989, for a structured mesh, and the above-noted "Introduction to numerical linear algebra and optimization", and "Delauney Triangulation and Meshing- Application to Finite Elements", George P.L. and Borouchaki H., Hermes 1998, for unstructured meshes. These references present a detailed description of mesh parameters and their entire disclosures are expressly incorporated herein by reference.

In step S302, an adaptive optimization criterion σ ($M1$, $U1$, -), which is used for projection and error control, is selected. In this embodiment, σ($M1$, $U1$, -) is the least square method. M1 is the fine mesh defined in step S301. U1 is a solution computed from the discretization of the basic equation (N*N linear equation) on M1.

In step S303, an initial optimum coarse mesh $M2$ is determined based on an a priori error estimation with respect to the size of the fine mesh data. (A basic theory of a priori estimation is described in the above-noted "Handbook of Grid Generation"). Finding an optimum coarse mesh is equivalent to finding a series of parameters that describe the mesh. One of these parameters is the mesh size H. Others are the number of nodes, number of elements, regularity, orthogonality and so on. As described before, in this embodiment, only the mesh size, number of nodes and numbers of elements are considered. These parameters are given as default values based on a priori estimation.

Step S302 and S303 correspond to the calculation of the initial optimum coarse mesh by the coarse mesh optimizer 101 in Fig. 2.

In step S304, a particular analyzer/solver to obtain a solution of a phenomenon equation is input by the user to select the particular analyzer/solver in conjunction with which the accelerator operates. Input and output data structures of the selected analyser/solver are determined by reference to the model database 109.

In step S305, a coarse mesh is generated according to the parameters.

In step S306, M*M linear system A'X'=B', which is equivalent to the N*N linear system AU1=B is constructed by the analyzer/solver. The analyzer/solver solves the M*M linear system A'X'=B' to have discrete solutions for each of the nodes on the mesh M2. Note that since the mesh M2 is a 3-D mesh, nodes are distributed in a 3-D space.

In step S306-1, it is checked whether interpolation is performed either on 2-D (surface), or on 3-D objects. If the interpolator uses the 3-D mesh, the solutions from the analyzer/solver are directly sent to interpolator, i.e. control proceeds to step S 308. On the other hand, if the interpolator uses 2-D or 2-D surface mesh, the solutions from the analyzer/solver are decomposed, i.e. control proceeds to step S307.

In step S307, the discrete solutions on the mesh M2 are divided into groups so that each group includes a set of the discrete solutions for nodes in a 2-D surface. (Plural 2-D surfaces are obtained by decomposing the 3-D geometrical data.) Groups are selected one after another to compute the interpolation.

In step S308, the solution of N*N linear system (on the mesh M1) is obtained by interpolation of the obtained solution of M*M linear system (on the mesh M2). Step S308 is performed by the interpolator 105 and details of step S308 are explained later.

In step S309, an error in the solution of N*N linear system is calculated by the analyzer/solver.

In step S310, it is determined whether the error is smaller than a predetermined value T. T is selected and input by the user. T can be derived from the accuracy input. If the error is smaller than T, control proceeds to step S311. If the error is not smaller than T, control goes to S312.

In step S311, the data format of the solution of N*N linear system on the mesh M2 is transformed so as to conform with a format for GUI. In other words, the data is transformed so that the CAD system can handle the data to display the result of the analysis graphically.

In step S312, the parameters of the coarse mesh are adjusted based on the estimation of Hessian. We want to reduce the difference (error) between the solutions on the coarse and fine meshes, the error in the coarse mesh being obtained from the analyzer/solver which operates on the coarse mesh. To reduce the error, we find an error related parameter which we can minimize, to thus, minimize the error. Mathematically, this is expressed as follows.

If $M$ represents the set of these parameters, then, an optimum mesh is equivalent to finding the optimal parameters that minimize $\sigma(M1, U1, M)$. In this embodiment, $\sigma(M1, U1, M)$ is defined as follows:

(A) $Min \ \sigma(M1, U1, M) = Min_a \int_{\Omega} [R_L(a, x)]^2 d\Omega + c \int_{\Gamma} [R_B(a, x)]^2 d\Gamma$, where

(B) $R_L(a,x) = L(u_{1h}(x) - u_{2H}(x))$ x $in \ \Omega$,

(C) $R_B(a,x) = B(u_{1h}(x) - u_{2H}(x))$ x $on \ \Gamma$,

$u_{1h}(x)$ is a solution calculated on the mesh M1. $u_{1h}(x)$ is a continuous solution and is obtained by interpolating discrete solutions a2 (vector of h numbers), which are the solutions of N*N linear matrix equations, $u_{2H}(x)$ is a solution calculated on the mesh $M2$. $u_{2H}(x)$ is obtained by interpolating discrete solutions a2 (vector of H numbers), which are the solutions of M*M linear matrix equations (which is constructed in step S306). c is a weighting function to emphasize the second term. $L$ and $B$ are operators determined by the type of analyzers/solvers of are defined by the user. $\Omega$ and $\Gamma$ are a domain and a boundary of the object to be analyzed. The details of these functions are described later. The calculation of (A) can be done in a conventional way, and is shown in "Numerical Solution of Partial Differential Equations in Science and Engineering", Lapidus L. and G.F. Pinder, John Wiley & Sons, 1982, for CAD and GIS, the entire disclosure of which is expressly incorporated herein by reference. For 3-D graphics, there is a detail explanation in "Computer Graphics", Forley, Van Dam, Feiner, and Hughes, Addison Wesley,1997. The entire disclosure of which is expressly incorporated herein by reference.

With the calculated new parameters, control returns to S305 to solve the problem on a smaller mesh size (i. e. having larger number of elements.) By use of the least squares method (global L2 projection) the error in projecting solutions from coarse to fine meshes is minimized.

In the above described flow charts, steps S301-S303, S305 and S308 mainly contribute to accelerate the computation. Steps S309, S310 and S312 are provided in case a desired accuracy is not obtained by the initial iteration. According to the combination of the proposed optimization criterion (according to the least square method as will be set forth below) and the interpolation, a high acceleration rate can be achieved. Step S304 of the method is provided for enabling this method to be used with a variety of analysis software (solver).

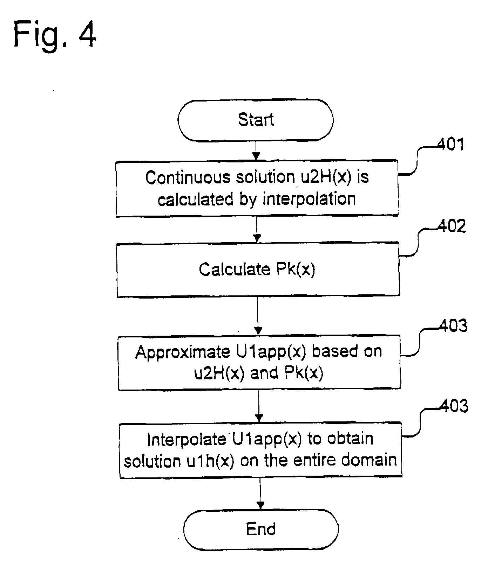

Fig. 4 is a flowchart illustrating the details of step S308.

In step S401, the discrete nodal solutions ($a_{2i}$, i=1...H) for M*M linear systems are received from the analyzer/solver 3. $a_{2i}$ is the solution on the mesh node $M_i$ on the coarse mesh M1. Then, interpolation of the $a_{2i}$ is performed to obtain a solution $u_{2H}(x)$ for the whole object, where x is a point in the object. $u_{2H}(x)$ is computed by using a local estimate of the solution $u_{2H}(x)$ estimated from point values $a_{2i}$ obtained by the following formula. In other words, discrete solutions for nodes of coarse mesh M2 are interpolated to have a solution on entire domain.

$$(D) \ u_{2H}(M) = u_{2H}(M_1) + \nabla u_{2H}|_{M_1} \cdot MM_1 + H(MM_1) \cdot MM_1$$

Here, M is a point (node) of mesh M1 and $M_1$ and $M_2$ are the two closest points (nodes) belonging to mesh M2.

$\nabla u|_{M_1}$ is the gradient vector of the solution $u_{2H}$ and $H(MM_1)$ is the Hessian of the solution applied to the vector $MM_1$. The quantity $MM_1$ represents the vector from point $M_1$ of coordinates ($x1, y1, z1$) to of point M of coordinates ($x, y, z$). The components of vector $MM_1$ are in the reference system ($x - x1, y - y1, z - z1$).

For a two points approximation the gradient vector $\nabla u|_{M1}$ is estimated by the formula:

$$\nabla u|_{M_1} = [u_{2H}(M_2) - u_{2H}(M_1)] \frac{M_1 M_2}{\|M_1 M_2\|^2}$$

This formula corresponds to the three dimensional generalization of the classical finite difference estimates of derivatives. A detailed explanation of this generation is contained in "Numerical Solution of Partial Differential Equations in Science and Engineering" previously cited.

Using this estimates, it is clear that $u_{2H}(x)$ may be computed using the values of the solution on the coarse mesh at $M_1$ and $M_2$.

$$u_{2H}(x) = u_{2H}(M_1) + [u_{2H}(M_2) - u_{2H}(M_1)] \frac{M_1 M_2}{\|M_1 M_2\|^2} \cdot MM_1 = \lambda u_{2H}(M_2) + (1 - \lambda) u_{2H}(M1)$$

$$\lambda = \frac{(x - x1)(x1 - x2) + (y - y1)(y - y2) + (z - z1)(z - z2)}{(x1 - x2)^2 + (y1 - y2)^2 + (z1 - z2)^2}$$

By this last approximation, one is computing the gradient only in the direction of $MM_1$. Depending on the type of element used, one may generalize the interpolation as follows:

$$u_{2H}(x) = \frac{1}{np}[(\lambda_1 u_{2H}(M_2) + (1 - \lambda_1) u_{2H}(M_1)) + (\lambda_2 u_{2H}(M_3) + (1 - \lambda_2) u_{2H}(M_2) +$$

$$\cdots + (\lambda_i u_{2H}(M_{(i+1)}) + (1 - \lambda_i) u_{2H}(M_i)) + \cdots + (\lambda_{np} u_{2H}(M_1) + (1 - \lambda_1) u_{2H}(M_{np}))]$$

$$\lambda_i = \frac{(x - xi)(xi - x(i + 1)) + (y - y1)(y - y(i + 1) + (z - zi)(z - z(i + 1))}{\|M_i M_{(i+1)}\|^2}$$

where $np$ is the number of interpolation points of mesh M2 used by the interpolation.

The interpolation can be performed by using another method. For example, the simplest way of computing $u_{2H}(x)$ is to use the interpolation functions $\psi_i(x)$ as an interpolation function of mesh M2. $\psi_i(x)$ is determined depending upon the analyzer/solver. The interpolation function $\psi_i(x)$ can be a linear interpolation, and so on.

In step S402, a transfer function $P_k(x)$ is calculated. From the above formula, the polynomial $P_k(x)$ can be calculated easily.

For a two points approximation:

$$P_1(x) = (1 - \lambda(x));$$

$$P_2(x) = \lambda(x)$$

$$\lambda_i = \frac{(x - x1)(x1 - x2) + (y - y1)(y - y2) + (z - z1)(z - z2)}{(x1 - x2)^2 + (y1 - y2)^2 + (z1 - z2)^2}$$

For a $np$ interpolation:

$$P_1(x) = \frac{1}{np}[(1 - \lambda_1(x)) + \lambda_{np}(x)];$$

$$P_2(x) = \frac{1}{np}[1 - \lambda_2(x)) + \lambda_1(x)];$$

$$P_i(x) = \frac{1}{np}[(1 - \lambda_i(x)) + \lambda_{(i-1)}(x)];$$

$$P_{np}(x) = \frac{1}{np}[(1 - \lambda_1(x)) + \lambda_{(np-1)}(x)]$$

After computation of $u_{2H}(x)$ at each point of the fine mesh, we may estimate the components of the Hessian using the following equation:

$$H(MM_1) \cdot MM_1 = u_{2H}(M) - u_{2H}(M_1) - \nabla u|_{M_1} \cdot MM_1$$

This equation is used for different points of the fine mesh. This estimation of the Hessian may be used for the computation of the size of the coarse mesh using the estimate in Chapter 12 of "Delauney Triangulation and Meshing-Application to Finite Elements" cited above.

In step S403, the approximation $U1app(x)$ of $u_{1h}(x)$ is calculated by using $P_k(x)$ and $u_{2H}(x)$ as follows. $U1app(x) = \Sigma P_k(x)u_{2H}(M_k)$, $k = 1...Ne$, where $x$ is a spacial point, which corresponds to the node on fine mesh M1. $M_k$ is a set of nodes constitutes an element $E$, which is most instances (but not always), on the coarse mesh $M2$ that includes the point x. $Ne$ is the total number of the interpolation points fixed by the user.

In step S404, a continuous solution $u_{1h}(x)$ is calculated by interpolating the calculated $U1app(x)$, for each nodes on the fine mesh M1. This interpolation can be calculated according to the default interpolation function provided in the analyzer/solver. For example, a linear interpolation can be used.

Thus, the $u_{1h}(x)$ is output as the solution.

In the conventional analyzer/solver, $u_{1h}(x)$ is calculated by solving N*N linear equations to obtain discrete solutions $a_{1j}, j = 1...h$, and then by interpolating $a_{1j}$ using interpolation function $\phi_i(x)$, provided in the solver. On the other hand, according to the present invention, N*N linear matrix equations are not solved in the solver. Instead of solving N*N linear matrix equation, approximation $U1app(x)$ is calculated by using the solutions of $a_{2i}$. Accordingly, the computation time can be reduced. At the same time, this invention can obtain a good approximate solution because of the following combination.

    (1) an initial optimum coarse mesh is determined by a priori estimation.
    (2) the transfer function $P_k(x)$ is provided as described above during interpolation.
    (3) $u_{2H}(x)$ is estimated by using formula (D).
    (4) the least square method that calculates the formula (A) is used to adjust the initial coarse mesh.

As described above, this invention achieves a desirable accuracy of the solution and an acceleration of the running time.

The present method thus reduces the number of basic operations. If the interpolation is linear in step S308, then order of magnitude of the operations for direct method of inversion is $O(M^3) + N * M = O(M^3)$. As described above, the solution of the M*M linear equations are calculated by the conventional (commercially available) analyzers/solvers. When the ratio between N and M is on the order of 10, then there results a reduction in computational labor of $10^3$ while obtaining the same accuracy.

Thus, according to this method, theoretical acceleration in the computational labor on the order of $10^3$ is enabled.

The practical computational time acceleration depends on the particular analysers/solvers, platforms and mesh generators utilized. Experimentally, improvement in computation time in the range of about 1/20 - 1/60 is achieved.

In the following description, the theory of how the optimization criterion for choosing an optimum mesh and the transfer function for interpolation between the coarse and fine meshes are derived is explained. This derivation is based on the least square formulation.

A. General Explanation

The least squares formulation may be described in terms of the following boundary value problem:

$$Lu = f \ in \ \Omega \tag{1}$$

$$Bu = g \ on \ \Gamma \tag{2}$$

where $L$ represents a linear or nonlinear differential operator; $B$ is a linear differential operator; $\Omega$ is the domain and $\Gamma$ is the external surface boundary.

A general least-squares method can be formulated by the following minimization problem:

*Minimize* $\|L\upsilon - f\|^2$

*Subject to* $\upsilon \in V_g$ (*problem P*)  (3)

where $V_g$ is a subspace of the Sobolev space $H^p(\Omega)$

$$V_g = \{\upsilon \in H^p(\Omega); \, B\upsilon - g = 0 \, on \, \Gamma\}  \quad (4)$$

$$H^p(\Omega) = \{\upsilon \in L^2(\Omega); \, \frac{\partial^{|\alpha|}\upsilon}{\partial x_1^{\alpha 1} \cdots \partial x_n^{\alpha_n}} \in L^2(\Omega)$$

$$with \, |\alpha| = \alpha_1 + \alpha_2 + \cdots + \alpha_n < p\}  \quad (5)$$

The parameter *p is* generally chosen in order that the function $L\upsilon$ belongs to $L^2(\Omega)$. The norm $\|.\|$ is associated with the scalar product < .,.> and is defined on the subspace $V_g$.

An internal approximation of Problem (P) may be defined by a family $\{V_h\}_h$ of finite dimensional closed subspaces of $V_g$, satisfying the following condition:

There exist $V \in V_g$ such that $\bar{V} = V_g$, and $r_h : V \to V_h$ such that $lim_{h-0}\|\tau_h\upsilon - \upsilon\| = 0 \, \forall \upsilon \in V$

Reference is made to "Numerical Methods for Nonlinear Variational Problems. Springer Series in Computational Physics", Glowinski R., Springer Verlag, 1986, the entire disclosure of which is expressly incorporated herein by reference, for details of such approximations.

An example of internal approximation may be achieved using Finite Element analysis. In such an approach, the dosed domain $\Omega$ is approximated by a polygonal domain $\Omega_h$, with a standard triangulation $\tau_h$ of $\Omega_h$ i.e. $\tau_h$ is a set of finite elements $E$. Further details of such an approach are set forth in "Introduction a l'analyse numerique des equations aux derivees partielles", Raviart P.A. and J.M. Thomas, Editions Masson (In French) 1988.

The Sobolev space $H^p(\Omega)$ is then approximated on $\tau_h$ by :

$$H_h^p(\Omega_h) = \{\upsilon_h | \upsilon_h \in C^{p-1}(\bar{\Omega}_h); \upsilon_h | E \in P_p, \, \forall \, E \in \tau_h\}  \quad (6)$$

where $P_p$ is the space of polynomials in one, two or three variables of degree less than *p*. In large computation codes, the Lagrange and Hermite interpolation functions are generally used for the interpolation over a single element in the treatment of parabolic problems. For further details, reference is made to the previously cited "Introduction a l'analyse numerique des equations aux derivees partielles" and "Numerical solution of partial differential equations in science and engineering".

The vector of global interpolation functions may be defined as:

$$\Phi(x) \; = \; \begin{pmatrix} \phi_1(\mathbf{x}) \\ \vdots \\ \phi_{N_p}(\mathbf{x}) \end{pmatrix}  \quad (7)$$

$$\phi_j(x) \in C^{p-1}(\bar{\Omega}_h).  \quad (8)$$

Formally, any function $\upsilon_h \in H_h^p(\Omega_h)$ may be written in terms of the vector of global interpolation functions, and the vector of unknown parameters a as follows:

$$v_h(\mathbf{x}) \;=\; \sum_{E \in \tau_h} \sum_{i=1}^{N_T} \phi_i|_E(\mathbf{x}) a_i = \lfloor \Phi(\mathbf{x}) \rfloor \mathbf{a}. \tag{9}$$

The Parameter $N_p$ is the total number of unknowns and $N_T$ is the number of unknowns on the element $E$. The vector x represents the independent space variable of the domain.

The boundary conditions are prescribed by specifying the finite dimensional subspace $V_h$.

$$V_h = \{v_h \in H_h^p(\Omega_h); \; Bv_h - g = 0 \; on \; \Gamma\} \tag{10}$$

The approximate Least-squares formulation of problem ($P$) may be defined as:

$$Minimize \; \|L(v_h) - f\|^2$$

$$Subject \; to \; v_h \in V_h \; (problem P_h) \tag{11}$$

In this general framework, error analysis of the least-squares approximation has been investigated for elliptic systems in "Least-Squares Methods for Elliptic Systems", Aziz A.K.,Kellog R.B., Stephens A.B., Math. Comp. Vol. 44, Number 169, pp. 53-70, 1985, for mixed type equations in Least-squares methods for mixed-type equations", Sermer P. and R. Mathon, SIAM Journal of Numerical Analysis, Vol. 18, No 4, pp. 705, 723, 1981) particularly as applied to problems of Fluid dynamics. ( "Numerical Methods for Non-linear Variational Problems. Springer Series in Computational Physics", the disclosure of each of these publications being expressly incorporated herein in their entirety by reference.

The choice of a suitable norm $\|.\|$ on $V_g$ depends on the type of the differential operator. For example ,the choice of a $H^1$-norm instead of the classic $L^2$-norm stabilized the least-squares solution of non-linear hyperbolic problems which generate shocks .

In the present situation, only linear operators are considered and therefore, the proposed least-squares method is formulated in terms of the $L^2$-norm.

Boundary conditions

In the approach described herein, the satisfaction of the boundary conditions are generally realized by adding a penalty term to the objective function to be minimized. In order to formulate this penalty method, the norm associated with the objective function (the Least-squares functional) must be properly defined. The Least-squares penalty formulation of Problem (P) and the approximate problem ($P_h$) *may* be written as:

$$Minimize \; \|Lv - f\|^2 + c\|Bv - g\|_\Gamma^2$$

$$Subject \; to \; v \in H^p(\Omega) \qquad (problem \; C) \tag{12}$$

and

$$Minimize \; \|Lv_h - f\|^2 + c\|Bv_h - g\|_\Gamma^2$$

$$Subject \; to \; v_h \in H_h^p(\Omega_h) \qquad (problem \; C_h) \tag{13}$$

where c represents a weighting function.

When *Problem $C_h$* is written in terms of the $L^2$-norm associated with both the interior residuals $R_L$ and the boundary residuals $R_B$, the $L^2$ 0 least squares formulation consists of the minimization of a functional $I_c$ with respect to the unknown vector a; where

$$I_c = \int_\Omega [R_L(\mathrm{a,x})]^2 d\Omega + c \int_\Gamma [R_B(\mathrm{a,x})]^2 d\Gamma$$

where

$$R_L(\mathrm{a,x}) = L\upsilon_h - f \text{ x } in \text{ } \Omega \tag{15}$$

$$R_B(\mathrm{a,x}) = B\upsilon_h - g \text{ x } on \text{ } \Gamma \tag{16}$$

A corresponding discrete formulation of the least squares method , also called collocation least squares, consists of selecting a series of collocation points inside the domain and on the boundary and to minimize the following functional :

$$I_d = \sum_{i=1}^{k}[R_L(\mathbf{a, x_i})]^2 + c \sum_{i=k+1}^{m} [R_B(\mathbf{a, x_i})]^2 \tag{17}$$

For $i = 1, ..., k$, $x_i$ corresponds to the interior collocation points and for $i = k + 1, ...., m$ to the boundary collocation points.

Important boundary conditions can be emphasized with large weights c, forcing the boundary residuals to be small.

Optimal choice of c have been discussed in Zeitoun et al "An iterative penalty method for the least square solution of boundary value problems", Numerical Methods Partial Differential Equations 13: p. 257-281, 1997, entire disclosure of which is expressly incorporated herein by reference.

Problem $P_h$ reduces to the least-squares formulation that is,

$$Min_a \int_\Omega [R_L(\mathrm{a,x})]^2 d\Omega$$

*Such that* $B(\lfloor \Phi(\mathrm{x})\rfloor)\mathrm{a} - g = R_B(\mathrm{a,x}) = 0$ *xon* $\Gamma$

*Problem* $(P_h)$ Problem $(P_h)$ is the special case where the constraints associated with the minimization are only defined on the boundary $\Gamma$.

In the following, only linear differential equations are considered. In this case ,the mini-max problem leads to quadratic programming.

After inserting the trial function into the interior residual and the boundary residual, the first order necessary condition for a minimum with respect to a leads to:

$$(A_1 + 2cA_2)\bar{\mathrm{a}} = F \tag{19}$$

where:

$$F = \int_\Omega L(\Phi(\mathrm{x}))f(\mathrm{x})d\Omega + 2c\int_\Omega B(\Phi(\mathrm{x}))b(\mathrm{x})d\mu$$

$$A_2 = \int_\Omega B(\Phi(\mathrm{x}))B(\lfloor \Phi(\mathrm{x})\rfloor)d\mu \tag{20}$$

Best approximation for $Pk(\mathrm{x})$

Consider now two distinct solutions $a_1$ and $a_2$ of the same boundary value problems for two meshes M1 and M2. The continuous solutions may be written as:

1. On mesh M1: $u_{1h}(\mathrm{x}) = (\lfloor \Phi(\mathrm{x})\rfloor)a_1$

$$u_{1h}(\mathbf{x}) = \sum_{E \in M1} \sum_{i=1}^{N_T} \phi_i|_E(\mathbf{x})a_i = \lfloor \Phi(\mathbf{x}) \rfloor \mathbf{a}_1. \qquad (21)$$

2. On mesh M2: $u_{2H}(x) = (\lfloor \Psi(x) \rfloor)a_2$

$$u_{2H}(\mathbf{x}) = \sum_{E \in M2} \sum_{i=1}^{N_T} \psi_i|_E(\mathbf{x})a_i = \lfloor \Psi(\mathbf{x}) \rfloor \mathbf{a}_2 \qquad (22)$$

The best approximation of a solution on mesh1 from a solution on mesh M2 may be formulated as the following least squares method:

$$Min_a I_c(a) = Min_a \int_\Omega [R_L(a, x)]^2 d\Omega + c \int_\Gamma [R_B(a, x)]^2 d\Gamma \qquad (23)$$

where

$$R_L(a,x) = L(u_{1h}(x) - u_{2H}(x)) \text{ x } in \ \Omega \qquad (24)$$

$$R_B(a,x) = B(u_{1h}(x) - u_{2H}(x)) \text{ x } on \ \Gamma \qquad (25)$$

The first order necessary condition for a minimum with respect to $a_1$ leads to:

$$(A_1 + 2cA_2)\tilde{a} = F \qquad (26)$$

where:

$$F = \int_\Omega L(\Phi(x))L(u_{2H}(x))d\Omega + 2c\int_\Omega B(\Phi(x))B(u_{2H}(x))d\mu \qquad (27)$$

$$A_2 = \int_\Omega B(\Phi(x))B(\lfloor \Phi(x) \rfloor)d\mu; \qquad (28)$$

$$A_1 = \int_\Omega L(\Phi(x))L(\lfloor \Phi(x) \rfloor)d\mu \qquad (29)$$

Using a lumping technique, the integrals on the domain $\Omega$ reduces to an integral on the elements containing the point *xi*.

$$Fi = \sum_{Ei/M2} \int_{Ei} L(\varphi_i(\mathbf{x}))L(u_{2H}(\mathbf{x}))d\Omega + 2c \sum_{Ei/M2} \int_{Ei} B(\varphi_i(\mathbf{x}))B(u_{2H}(\mathbf{x}))d\mu$$

$$(30)$$

$$A_{2ij} = \sum_{Ei/M2} \int_{Ei} B(\varphi i(\mathbf{x}))B(\varphi j(\mathbf{x}))d\mu; \qquad (31)$$

$$A_{1ij} = \sum_{Ei/M2} \int_{Ei} L(\varphi i(\mathbf{x}))L(\varphi j(\mathbf{x}))d\mu \qquad (32)$$

Analytical formula for these integrals may be found in the theory of finite element as discussed, for example, in "Introduction to numerical linear algebra and optimization", Ciarlet P.G. Cambridge University Press, 1989, the entire disclosure of which is expressly incorporated herein by reference.

In this last formulation, the difficulty is the computation of $u_{2H}(x)$ from the nodal solution $a_2$.

The simplest way of computation of $u_{2H}(x)$ is to use the interpolation functions $\psi_i(x)$ as an interpolation function of mesh M2.

Another way is by using a local estimate of the solution $u(x)$ estimated from point values.

Consider a point $M$ of mesh M1 and the two closest point $M1$ and $M2$ belonging to Mesh M2.

$$u(M) = u(M1) + \nabla u|_{M_1} \cdot MM1 + H(MM1) \cdot MM1$$

where $\nabla u|_{M1}$ is the gradient vector of the solution $u_{2H}$ and $H(MM_1)$ is the Hessian of the solution applied to the vector $MM_1$. The quantity $MM_1$ represents the vector from point $M_1$ of coordinates $(x1, y1, z1)$ to of point $M$ of coordinates $(x, y, z)$. The components of vector $MM_1$ are in the reference system $(x - x1, y - y1, z - z1)$.

For a two points approximation the gradient vector $\nabla u|_{M1}$ is estimated by the formula:

$$\nabla u|_{M_1} = [u(M_2) - u(M_1)]\frac{M_1M_2}{\|M_1M_2\|^2}$$

This formula corresponds to the three dimensional generalization of the classical finite difference estimates of derivatives. An explanation of this generalization is set forth in the previously cited "Numerical solution of partial differential equations in science and engineering".

Using this estimate, it is clear that $u_{2H}(x)$ may be computed using the values of the solution on the coarse mesh at M1 and M2.

$$u_{2H}(x) = u(M_1) + [u(M_2) - u(M_1)]\frac{M_1M_2}{\|M_1M_2\|^2}\cdot MM_1 = \lambda u(M_2) + (1 - \lambda)u(M_1)$$

where

$$\lambda = \frac{(x - x1)(x1 - x2) + (y - y1)(y - y2) + (z - z1)(z - z2)}{(x1 - x2)^2 + (y1 - y2)^2 + (z1 - z2)^2}$$

By this last approximation, one is computing the gradient only in the direction of $MM_1$. Depending on the type of element used, one may generalize the interpolation as follows:

$$u_{2H}(x) = \frac{1}{np}[(\lambda_1 u(M_2) + (1 - \lambda_1)u(M_1)) + (\lambda_2 u(M_3) + (1 - \lambda_2)u(M_2) +$$

$$...+ (\lambda_i u(M_{(i+1)}) + (1 - \lambda_i)u(M_i)) + ... + (\lambda_{np} u(M_1) + (1 - \lambda_1)u(M_{np}))]$$

where

$$\lambda_i = \frac{(x - xi)(xi - x(i + 1)) + (y - y1)(y(i + 1)) + (z - zi)(z - z(i + 1))}{\left\|M_i M_{(i+1)}\right\|^2}$$

$np$ is the number of interpolation points of mesh M1 used by the interpolation.

Computation of $P_k(x)$

From the above formula we may compute easily the polynomial $P_k(x)$.
For a two points approximation:

$$P_1(x) = (1 - \lambda(x));$$

$$P_2(x) = \lambda(x)$$

$$\lambda_i = \frac{(x - x1)(x1 - x2) + (y - y1)(y - y2) + (z - z1)(z - z2)}{(x1 - x2)^2 + (y1 - y2)^2 + (z1 - z2)^2}$$

For a $np$ interpolation:

$$P_1(x) = \frac{1}{np}[(1 - \lambda_1(x)) + \lambda_{np}(x)];$$

$$P_2(x) = \frac{1}{np}[1 - \lambda_2(x)) + \lambda_1(x)];$$

$$P_i(x) = \frac{1}{np}[(1 - \lambda_i(x)) + \lambda_{(i-1)}(x)];$$

$$P_{np}(x) = \frac{1}{np}[(1 - \lambda_1(x)) + \lambda_{(np-1)}(x)]$$

Computation of the Hessian $H(MM_1)$

After computation of $u_{2H}(x)$ at each point of the fine mesh, we may estimate the components of the Hessian using the following equation:

$$H(MM_1) \cdot MM_1 = u(M) - u(M_1) - \nabla u|_{M_1} \cdot MM_1$$

This equation is used for different points of the fine mesh. This estimation of the Hessian may be used for the computation of the size of the coarse mesh using the estimate in Chapter 12 of "Delauney Triangulation and Meshing-Application to Finite Elements".
As used herein, the terms "mesh" and "grid" have the same meaning. To the extent no explicitly set forth above, the entire disclosures of each of the publications referenced herein are expressly incorporated herein by reference.
Fig. 5 illustrates various software for use with CAD, GIS and 3D rendering and the analyzers/solvers associated therewith.
According to the features of the present invention using a Nastran solver/analyzer with 100,000 nodes, a solution with a 20% error was achieved. Using the same program with 50,000 nodes, a solution with a 40% error was obtained. By virtue of the present invention (i.e., utilizing the accelerator of the present invention and the acceleration method of the present invention, a solution can be obtained with 10,000 nodes with the same error as the 100,000 node solution without present invention). Accordingly, the present invention results in an extremely significant reduction in computational labor (and hence computation time). Using the present invention, a reduction m operations of between 1/20 to 1/60 can be achieved. In this regard, Applicant notes that, theoretically, i.e., based upon the mathematical underpinnings of the present invention, reductions of the order of $(10^3)$ can be achieved. Practically speaking, however, the type of analyzer/solver and the platform that is used with as well as the other physical details of the apparatus result in somewhat lower acceleration time and reduction of computational labor as set forth above.

In accordance with the embodiment of the present invention, the method described herein is intended for operation as software programs running on a computer processor. Dedicated hardware implementations including, but not limited to, application specific integrated circuits, programmable logic arrays and other hardware devices can likewise be constructed to implement the method described herein. Furthermore, alternative software implementations including, but not limited to, distributed processing or component/object distributed processing, parallel processing, or virtual machine processing can also be constructed to implement the method described herein.

It should also be noted that the software implementations of the present invention as described herein are optionally stored on a tangible storage medium, such as: a magnetic medium such as a disk or tape, a magneto optical or optical medium such as a disk; or a solid state medium such as a memory card or other package that houses one or more read-only (nonvolatile) memories, random access memories, or other rewritable (volatile) memories. A digital file attachment to e-mail or other self-contained information archive or set of archives is considered a distribution medium equivalent to a tangible storage medium. Accordingly, the invention is considered to include a tangible storage medium or distribution medium, as listed herein and including art-recognized equivalents and successor media, in which the software implementations herein are stored.

It is noted that the foregoing example and embodiments have been provided merely for the purpose of explanation and are in no way to be construes as limiting of the features of the present invention. While the present invention has been described with reference to exemplary embodiments, it is understood that the words which have been used herein are words of description and illustration rather than words of limitation. Changes may be made within the scope of the appended claims, as presently set forth and as amended, without departing from the scope and spirit of the present invention in its various aspects. Although the present invention has been described herein with reference to particular means, materials, and embodiments, the present invention is not intended to be limited to the particulars disclosed herein; rather, the present invention extends, to all functionally equivalent structures methods and used such as are within the scope of the appended claims.

**Claims**

1. An accelerator externally connectable to an analyzer/solver and a mesh generator, the analyzer/solver solving linear matrix equations based on a mesh generated by the mesh generator, the accelerator comprising:

   a mesh size optimizer that receives a first mesh generated by the mesh generator, calculates an optimum mesh size based on the first mesh, and outputs the optimum mesh size to the mesh generator so that the mesh generator generates a second mesh in accordance with the optimum mesh size, the optimum mesh size being larger than the size of the first mesh;
   an interpolator that reads solutions calculated on the second mesh by the analyzer/solver and converts the solutions on the second mesh into solutions on the first mesh by interpolation.

2. The accelerator according to claim 1, wherein the analyzer/solver is selected from a plurality of analyzers/solvers having a plurality of input and output data structures, the accelerator further comprising a solver selector that selects one of the data structures corresponding to the selected analyzer/solver.

3. The accelerator according to claim 2, further comprising a model database that stores a relationship between said plurality of analyzers/solvers and the plurality of data structures, and wherein the solver selector retrieves a data structure corresponding to the selected analyzer/solver from the model database.

4. The accelerator according to claim 1, wherein the mesh generator generates 3-D mesh data of an object and the analyzer/solver outputs solutions on 3-D mesh data, the accelerator further comprising a decomposer that receives the solutions on 3-D mesh data from the analyzer/solver and converts the solutions on the 3-D mesh data into solutions on 2-D surfaces of the object.

5. The accelerator according to claim 1, further comprising an error estimator that estimates an error in the interpolated solutions is less than a predetermined amount.

6. The accelerator according to claim 5, wherein the error is estimated based on the Hessian of the interpolated solutions.

7. The accelerator according to claim 1, wherein the coarse mesh size optimizer calculates the optimum mesh size based on a priori estimation.

8. The accelerator according to claim 7, wherein said coarse mesh size optimizer adjusts the optimum mesh size based upon a least square method.

9. The accelerator according to claim 8, wherein the coarse mesh size optimizer adjusts the optimum mesh size by an equation

$$Min_a I_c(a) = Min_a \int_\Omega [R_L(a,x)]^2 d\Omega + c \int_\Gamma (R_B(a,x))^2 d\Gamma,$$

where

$$R_L(a,x) = L(u_{1h}(x) - u_{2H}(x)) \text{ x } in \text{ } \Omega,$$

$$R_B(a,x) = B(u_{1h}(x) - u_{2H}(x)) \text{ x on } \Gamma,$$

wherein $Ic(a)$ is the least square function defined on at least a portion of an object, $u_{1h}(x)$ is a continuous solution on the fine mesh obtained by interpolating discrete solutions a1 (vector of N numbers), which are the solutions of N*N linear equations, $u_{2H}(x)$ is a continuous solution calculated on the coarse mesh, and is obtained by interpolating discrete solutions a2 (vector of M numbers) using a gradient estimate, which are the solutions of M*M linear matrix equations, c is a weighting function to emphasize the second term, $L$ and $B$ are operators determined by at least one of the type of analyzers/solvers and a user, and $\Omega$ and $\Gamma$ are a domain and a boundary of the object to be analyzed.

10. A method for accelerating a computation of an analyzer/solver that solves linear matrix equations resulting from mesh generation, comprising:

generating a fine mesh resulting in a N*N linear system;
choosing an adaptive optimization criterion;
finding an optimum mesh size based on an a priori estimation;
generating a coarse mesh with the optimum mesh size resulting in a M*M linear system, which corresponds to the N*N linear system;
solving the M*M linear system to obtain first solutions; and
computing second solutions of the N*N linear system by interpolation of the first solutions of the M*M linear system.

11. The method according to claim 10, further comprising:

selecting the analyzer/solver from a plurality of analyzers/solvers; and
determining a data structure of the selected analyzer/solver.

12. The method according to claim 10, further comprising:
decomposing the first solutions for a 3-D object into groups, each group corresponding to a 2-D surface of the object.

13. The method according to claim 10, further comprising:

estimating an error of the second solutions based upon a Hessian;
determining whether the error is less than a predetermined amount; and
when the error is not less than the predetermined amount, generating a new mesh with a mesh size smaller than the mesh size of the coarse mesh and computing the second solutions on the new mesh.

14. The method according to claim 10, further comprising:
transforming the second solutions into data to be displayed by graphical user interface.

**15.** A method according to claim 8, wherein the adaptive optimization criteria is defined by

$$Min_a I_c(a) = Min_a \int_\Omega [R_L(a,x)]^2 d\Omega + c \int_\Gamma [R_B(a,x)]^2 d\Gamma,$$

where

$$R_L(a,x) = L(u_{1h}(x) - u_{2H}(x)) \times in\ \Omega,$$

$$R_B(a,x) = B(u_{1h}(x) - u_{2H}(x)) \times on\ \Gamma,$$

wherein, $Ic(a)$ is the least square function defined on at least a portion of an object, $u_{1h}(x)$ is a continuous solution on the fine mesh obtained by interpolating discrete solutions a1 (vector of N numbers), which are the discrete solutions on of N*N linear equations, $u_{2H}(x)$ is a continuous solution calculated on the coarse mesh, and is obtained by interpolating discrete solutions a2 (vector of M numbers) using a gradient estimate, which are the solutions of M*M linear matrix equations, c is a weighting function to emphasize the second term, L and B are operators determined by at least one of the type of analyzers/solvers and a user, and $\Omega$ and $\Gamma$ are a domain and a boundary of the object to be analyzed.

**16.** A system that accelerates solution of linear matrix equations by a numerical analyzer/solver resulting from mesh computation using a computer library external of said analyzer/solver.

**17.** The system according to claim 16, wherein the system utilizes adaptive grid techniques on two levels of mesh computation.

**18.** The system according to claim 16, wherein the system generates a coarse mesh from a fine mesh and solves the equations on the coarse mesh.

**19.** The system according to claim 18, wherein a ratio between the fine and coarse meshes is on the order of 10.

**20.** The system according to claim 18, wherein interpolating error between the coarse and fine meshes is controlled by an estimation method.

**21.** The system according to claim 20, wherein the estimation method is a least squares method.

**22.** The system according to claim 16, wherein said computer library utilizes geometry of an object as input, creates an optimal mesh and generates a solution on the optimal mesh with error control.

**23.** The system according to claim 16, wherein said computer library acts upon input data of an analyzer/solver with which said system cooperates without changing the internal code of the analyzer/solver.

**24.** The system according to claim 16, wherein a theoretical acceleration of computational time on the order of $10^3$ is enabled.

**25.** The system according to claim 16, wherein said computer library provides error control to maintain a predetermined degree of accuracy of solutions while reducing data storage requirements and decreasing running time.

**26.** A system that accelerates solutions of linear matrix equations by generating a mesh having a coarse mesh size as a projection of a mesh having a fine mesh size and calculates an optimum mesh size by minimizing the relationship:

$$Min_a I_c(a) = Min_a \int_\Omega [R_L(a,x)]^2 d\Omega + c \int_\Gamma [R_B(a,x)]^2 d\Gamma,$$

where

$$R_L(a,x) = L(u_{1h}(x) - u_{2H}(x)) \text{ x } in \ \Omega,$$

$$R_B(a,x) = B(u_{1h}(x) - u_{2H}(x)) \text{ x } on \ \Gamma,$$

wherein, $Ic(a)$ is the least square function defined on at least a portion of an object, $u_{1h}(x)$ is a continuous solution on the fine mesh obtained by interpolating discrete solutions a1 (vector of N numbers), which are the discrete solutions on of N*N linear equations, $u_{2H}(x)$ is a continuous solution calculated on the coarse mesh, and is obtained by interpolating discrete solutions a2 (vector of M numbers) using a gradient estimate, which are the solutions of M*M linear matrix equations, c is a weighting function to emphasize the second term, $L$ and $B$ are operators determined by at least one of analyzers/solvers and a user, and $\Omega$ and $\Gamma$ are a domain and a boundary of the object to be analyzed.

27. A method of solving linear matrix equations described by a fine mesh, the method comprising:

choosing a coarse mesh with an error control based on a priori estimation;
solving the equations on the coarse mesh; and
interpolating the solutions to the fine mesh.

28. The method of claim 27, the interpolation utilizing a least squares method.

29. The accelerator according to claim 1, wherein the solutions calculated by the analyzer/solver are discrete solutions on respective points of the second mesh, and the interpolator calculates a continuous solution $u_{2H}(x)$ for a whole domain by using the relationship:

$$u_{2H}(M) = u_{2H}(M_1) + \nabla u_{2H}|_{M_1} \cdot MM_1 + H(MM_1) \cdot MM_1$$

where $M$ is a point of the first mesh, $M_1$ is the closest point of the second mesh, $\nabla u|_{M1}$ is a gradient vector of the solution $u_{2H}(x)$, $H(MM_1)$ is the Hessian of the solution applied to the vector $MM_1$, and $MM_1$ represents the vector from point $M_1$ of coordinates $(x1, y1, z1)$ to the point $M$ of coordinates $(x,y,z)$.

30. The accelerator according to claim 1, wherein the interpolator projects the solutions on the second mesh calculated by the analyzer/solver onto the first mesh by using the relationship:

$$P_i(x) = \frac{1}{np}[(1- \lambda_i(x)) + \lambda_{(i-1)}(x)];$$

$$\lambda_i = \frac{(x - xi)(xi - x(i + 1)) + (y - y1)(y - y(i + 1)) + (z - zi)(z - z(i + 1))}{\left\|M_iM_{(i+1)}\right\|^2}$$

where $np$ is the number of interpolation points of the first mesh, and where $M_i$ and $M_{(i+1)}$ are points on the second mesh having respective coordinates $(xi, yi, zi)$ and $(x(i + 1), y(i + 1), z(i + 1))$.

31. The accelerator according to claim 30, wherein the interpolator projects the solutions on the second mesh onto the first mesh by using the relationship:

$$U1app(x) = \Sigma P_k(x)u_{2H}(M_k), \ k = 1...Ne,$$

where $x$ is a spacial point, which corresponds to a point on first mesh, $M_k$ is a set of points constituting at least a portion of an element $E$ on the second mesh that includes the point x, $Ne$ is the total number of the interpolation points fixed by the user, and $u_{2H}(x)$ is a continuous solution for a whole domain calculated based on the solutions on points of the second mesh.

32. The method according to claim 10, wherein the first solutions are discrete solutions on respective points of the second mesh, and computing of the second solutions includes computing a continuous solution $u_{2H}(x)$ for a whole domain by using the relationship:

$$u_{2H}(M) = u_{2H}(M_1) + \nabla u_{2H}|_{M_1} \cdot MM_1 + H(MM_1) \cdot MM_1$$

where M is a point of the first mesh, $M_1$ is the closest point of the second mesh, $\nabla u|_{M1}$ is a gradient vector of the solution $u_{2H}(x)$, $H(MM_1)$ is the Hessian of the solution applied to the vector $MM_1$, and $MM_1$ represents the vector from point $M_1$ of coordinates $(x1, y1, z1)$ to the point $M$ of coordinates $(x, y, z)$.

33. The method according to claim 10, wherein computing of the second solutions includes projecting the first solutions of the second mesh onto the first mesh by using the relationship:

$$P_i(x) = \frac{1}{np}[(1 - \lambda_i(x)) + \lambda_{(i-1)}(x)];$$

$$\lambda_i = \frac{(x - xi)(xi - x(i + 1)) + (y - y1)(y - y(i + 1)) + (z - zi)(z - z(i + 1))}{\left\|M_i M_{(i+1)}\right\|^2}$$

where $np$ is the number of interpolation points of the first mesh, and where $M_i$ and $M_{(i+1)}$ are points on the second mesh having respective coordinates $(xi, yi, zi)$ and $(x(i + 1), y(i + 1), z(i + 1))$.

34. The method according to claim 33, wherein computing of the second solutions includes projecting the solutions of the second mesh onto the first mesh by using the relationship:

$$U1app(x) = \Sigma P_k(x)u_{2H}(M_k), \; k = 1...Ne,$$

where $x$ is a spacial point, which corresponds to a point on first mesh, $M_k$ is a set of points constituting at least a portion of an element $E$ on the second mesh that includes the point x, $Ne$ is the total number of the interpolation points fixed by the user, and $u_{2H}(x)$ is a continuous solution for a whole domain calculated based on the solutions on points of the second mesh.

35. A program storage device readable by a machine, the program storage device tangibly embodying a program of instruction executable by the machine to perform a method for accelerating solutions of linear matrix equations, the method comprising:

reading a fine mesh generated by a mesh generator, the fine mesh resulting in a N*N linear system;
finding an optimum mesh size based on the fine mesh by using an a priori estimation;
generating a coarse mesh based on the optimum mesh size, resulting in a M*M linear system, which corresponds to the N*N linear system;
instructing an analyzer/solver to solve the M*M linear system to obtain first solutions; and
computing second solutions of the N*N linear system by interpolation of the first solutions of the M*M linear system.

36. The program storage device according to claim 35, wherein the first solutions are discrete solutions on respective points of the second mesh, and computing of the second solutions includes computing a continuous solution $u_{2H}(x)$ for a whole domain by using the relationship:

$$u_{2H}(M) = u_{2H}(M_1) + \nabla u_{2H}|_{M1} \cdot MM_1 + H(MM_1) \cdot MM_1$$

where $M$ is a point of the first mesh, $M_1$ is the closest point of the second mesh, $\nabla u|_{M1}$ is a gradient vector of the solution $u_{2H}(x)$, $H(MM_1)$ is the Hessian of the solution applied to the vector $MM_1$, and $MM_1$ represents the vector from point $M_1$ of coordinates $(x1, y1, z1)$ to the point $M$ of coordinates $(x,y,z)$.

37. The program storage device according to claim 35, wherein computing of the second solutions includes projecting the first solutions of the second mesh onto the first mesh by using the relationship:

$$P_i(x) = \frac{1}{np}[(1 - \lambda_i(x)) + \lambda_{(i-1)}(x)];$$

$$\lambda_i = \frac{(x - xi)(xi - x(i + 1)) + (y - y1)(y - y(i + 1)) + (z - zi)(z - z(i + 1))}{\left\|M_iM_{(i+1)}\right\|^2}$$

where $np$ is the number of interpolation points of the first mesh, and where $M_i$ and $M_{(i+1)}$ are points on the second mesh having respective coordinates $(xi, yi, zi)$ and $(x(i + 1), y(i + 1), z(i + 1))$.

38. The program storage device according to claim 37, wherein computing of the second solutions includes projecting the solutions of the second mesh onto the first mesh by using the relationship:

$$U1app(x) = \Sigma P_k(x)u_{2H}(M_k), \ k = 1...Ne,$$

where $x$ is a spacial point, which corresponds to a point on first mesh, $M_k$ is a set of points constituting at least a portion of an element $E$ on the second mesh that includes the point x, $Ne$ is the total number of the interpolation points fixed by the user, and $u_{2H}(x)$ is a continuous solution for a whole domain calculated based on the solutions on points of the second mesh.

39. The program storage device according to claim 35, further having a model database that stores a relationship between a plurality of analyzers/solvers and a plurality of data structures, and the method further comprising:

receiving an input selecting one of the plurality of analyzer/solver; and
retrieving one of the plurality of data structures corresponding to the selected analyzer/solver.

# Fig. 1

# Fig. 2

Mesh data

Input Device

Form Transformer ⌐110

Geometrical DB ⌐108

Coarse Mesh Optimizer ⌐101

Error Estimator ⌐106

Mesh DB ⌐107

Coarse Mesh Generator ⌐102

Interpolator ⌐105

Model DB ⌐109

Solver Selector ⌐103

2D Decomposer ⌐104

Input Device

Analyzer/solver (Software) ⌐3

## Fig. 3

Start

Output geometric data — 300

Create initial (fine) mesh M1 — 301

Choose adaptive optimization criterion — 302

Choose initial mesh size for coarse mesh M2 — 303

Choose Solver — 304

Create coarse mesh M2 — 305

Compute solution on mesh M2 — 306

Interpolator uses a 2-D surface mesh? — 306-1

No

Yes

Select a 2-D surface — 307

312

Increase mesh size based on Hessian Estimates Choose mesh size using equation (A)

Interpolate the solutions on mesh M1 — 308

Calculate error — 309

Error < T — 310

No

Yes

Transform data format to GUI — 311

End

# Fig. 4

```
        ┌─────────────────┐
        │      Start       │
        └─────────────────┘
                 │
                 ▼
   ┌────────────────────────────────┐   ─401
   │ Continuous solution u2H(x) is  │
   │   calculated by interpolation  │
   └────────────────────────────────┘
                 │
                 ▼
   ┌────────────────────────────────┐   ─402
   │        Calculate Pk(x)         │
   └────────────────────────────────┘
                 │
                 ▼
   ┌────────────────────────────────┐   ─403
   │   Approximate U1app(x) based on │
   │        u2H(x) and Pk(x)        │
   └────────────────────────────────┘
                 │
                 ▼
   ┌────────────────────────────────┐   ─403
   │   Interpolate U1app(x) to obtain│
   │ solution u1h(x) on the entire domain│
   └────────────────────────────────┘
                 │
                 ▼
        ┌─────────────────┐
        │       End        │
        └─────────────────┘
```

Fig. 5

|  | CAD | GIS | 3D-rendering |
|---|---|---|---|
| Software/Object | PRO-engineer(PTC) CATIA (Dassault-IBM) Unigraphics | Arcview(E.S.R.I) Arcinfo(E.S.R.I) Intergraph Mapinfo | Photoshop (Adobe) SoftImage |
| Solver/Analyzer | Nastran(MSI) COSMOS ANSYS MOLDFLOW | E.P.A. U.S.G.S. MODFLOW | 3D-Xray Tracing Shadow analysis Radiocity Methods |

# Fig. 6

```
                              ┌─────────────┐ ⌐1
                              │  CAD or GIS │
                              │    3-D      │◄──────────┐
                              │  rendering  │           │
                              └─────────────┘           │
                                     │                  │
                                     ▼                  │
┌──────────────┐            ┌─────────────┐ ⌐2         │
│ Input Device │───────────►│    Mesh     │            │
│              │            │  Generator  │            │
└──────────────┘            └─────────────┘            │
                                     │                  │
                                     ▼                  │
                              ┌─────────────┐ ⌐3        │
                              │  Analyzer/  │           │
                              │   Solver    │───────────┘
                              └─────────────┘
```